# EUROPEAN PATENT APPLICATION

(11) **EP 2 535 125 A2**
(43) Date of publication of application: **19.12.2012**
(21) Application number: 11739489.0
(22) Date of filing: 11.03.2011
(51) Int. Cl.: B22D 11/12, B23K 7/06, B21B 1/46, G01V 8/10

(54) **SLAB PROCESSING METHOD AND SLAB PROCESSING SYSTEM**

(30) Priority: 08.02.2010 KR 20100011570
(71) Applicant: POSCO, Nam-gu Pohang-si, Gyeongsangbuk-do 790-300 (KR)
(72) Inventor: KIM, Seong Yeon, Gwangyang-Si Jeollanam-Do 545-769 (KR); PARK, Yeong Seon, Gwangyang-Si Jeollanam-Do 545-786 (KR)
(74) Representative: Zech, Stefan Markus
(86) International application number: PCT/IB2011/051038
(87) International publication number: WO 2011/095961

(57) **Abstract**

The present invention relates to a slab processing method and a slab processing system, which can manufacture hot rolled steel plates with high quality edges and increase the operating rate of machinery. In particular, a slab processing method according to an embodiment of the present invention comprises the steps of: preparing a slab for processing; scarfing the edge regions of the slab prior to cooling the slab to a temperature below 600°C; and post-processing the slab.

## Description

### TECHNICAL FIELD

The present invention relates to a slab processing method and a slab processing system, and more particularly, to a slab processing method and a slab processing system, which can manufacture hot rolled steel plates with high-quality edges and increase the operating rate of machinery.

### BACKGROUND ART

In general, a slab produced in a continuous casting machine is cut into slabs each weighing 40 ton or less, then heated in a reheating furnace, and thereafter input into a hot strip mill to thereby produce a hot-rolled coil.

A slab produced in a continuous casting process may have a number of corner cracks in edge regions thereof , and such corner cracks become more serious in steel such as medium carbon steel having a peritectic reaction. A slab having corner cracks is input into a rolling mill and then rolled, leading to operation accidents such as the rupture of a plate, or causing a produced hot-rolled coil to have edge scab defects. Accordingly, defects of a steel slab, which is susceptible to corner cracks, are typically removed by scarfing corners separately after the completion of continuous casting, and thereafter a hot rolling is performed.

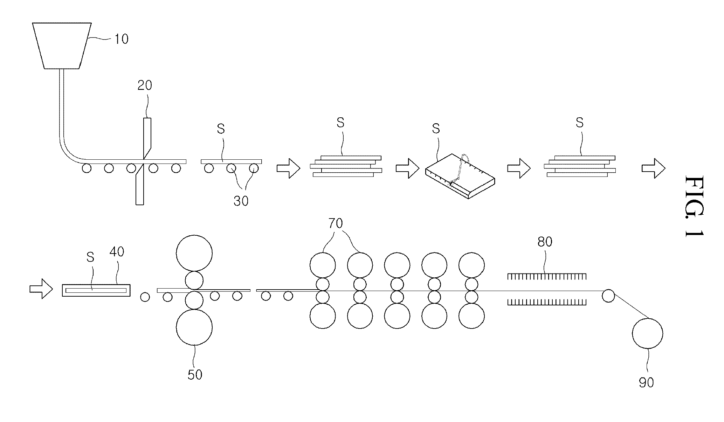

FIG. 1 is a conceptual diagram illustrating a related art method for manufacturing a hot-rolled steel plate, which will be described below. First, a slab S produced in a continuous caster 10 is cut into slabs S each weighing 40 ton or less by a cutter 20. The cut slabs S are stored in a separate open-storage area and typically cooled to 100°C or lower. To remove defects occurring at edge portions and side surfaces of the cooled slab S, a hand scarfing process that manually scarfs the edge portions and side surfaces of the slab S by a worker is generally performed by using a hand torch. The slab which has been scarfed is stored again in the open-storage area, and then the cooled slab S is charged into a reheating furnace 40 for hot rolling so that the slab S is heated to 1,000 °C or higher, and rough-rolled in a rough-rolling mill. A bar, which is the rough-rolled slab S, is subjected to a bar-coiling step in a coil box 60, and is then uncoiled and passes through a rolling mill 70 to be rolled to a desired thickness. Afterwards, the rolled steel plate is cooled by cooling means 80, and then wound by a winder 90.

According to the related art method for manufacturing a hot-rolled steep plate, a slab produced by a continuous caster is stored and cooled in an open-storage area, but, during the cooling of the slab, cracks existing in the surface, particularly in edges of the slab with low hot ductility grow to be enlarged and also other cracks are additionally generated, thereby making it difficult to perfectly remove defects even through the scarfing process.

For hot rolling, a slab cooled to an atmospheric temperature should be charged into a reheating furnace and heated up to a recrystallization temperature; however, the slab should be typically left for about 3 hours in the reheating furnace in order to raise the temperature of the slab having the atmospheric temperature (100°C or less) to 1,000°C or higher. This causes a problem in that as the slab remains longer in the reheating furnace, the operating rate of a rolling facility is lowered and a manufacturing cost is also increased.

The continuous casting process for manufacturing a thin slab having a thickness of 40-120 mm is performed at a casting speed of 4-8 m/min, which is 2-3 times faster than the casting speed, 1-3 m/min, of general slabs (120-150 mm in thickness), resulting in fine cracks being frequently generated in a solidified shell all over a periphery of a narrow side of the slab. However, due to the nature of the process for manufacturing a hot-rolled steel plate using a thin slab, a process for removing defects from the slab surface is not additionally performed but directly input into a rolling mill to produce a hot-rolled steep plate even though the slab or bar has cracks therein. This leads to a problem in that defects are frequently detected in a final product, i.e., hot-rolled coil.

### DISCLOSURE OF THE INVENTION

### TECHNICAL PROBLEM

Embodiments of the present invention provide a slab processing method and a slab processing system, which can improve the quality and yield of the hot-rolled steel plate which is obtained by rolling a slab as a material, and also increase the operating rate of a rolling facility, thereby reducing manufacturing costs of a hot-rolled steel plate.

Embodiments of the present invention also provide a slab processing method and a slab processing system, which can manufacture a hot-rolled steel plate with excellent quality by scarfing an edge region of a slab before the slab produced in a continuous caster is cooled to a temperature below 600°C, and then increasing a temperature for hot-rolling or directly performing hot-rolling.

Embodiments of the present invention also provide a slab processing method and a slab processing system, which can not only produce a hot-rolled steel plate with excellent quality but can also improve the productivity of a hot-rolled steel plate by performing scarfing, reheating and hot-rolling processes on an edge region of a slab in in-line facilities before the slab produced in a continuous caster is cooled.

### TECHNICAL SOLUTION

In accordance with an exemplary embodiment, a slab processing method includes: a slab preparation operation of preparing a slab to be processed; a scarfing operation of scarfing at least an edge region of the slab before the slab is cooled to a temperature below 600 °C; and a post-processing operation of post-processing the slab.

The slab processing method may include a detection operation of detecting surface defects in the edge region of the slab, wherein a scarfing amount of the edge region of the slab during the scarfing operation is controlled according to detection results of the surface defects.

After the scarfing operation, the slab may be subjected to the post-processing operation in the state where a temperature of the slab is maintained at 600 °C or higher.

The scarfing operation may be performed such that four edge regions of the slab are scarfed at the same time.

The scarfing operation may be performed such that four edge regions of the slab and narrow-sides at both sides of the slab are scarfed at once.

The scarfing operation may be performed while the slab prepared in the slab preparation operation is being transferred to the post-processing operation.

The slab prepared in the slab preparation operation may have a thickness ranging from 120 to 500 mm, and the slab processing method further include a reheating operation of charging the slab scarfed in the scarfing operation into a reheating unit to increase a temperature of the slab to 1,000°C or higher, wherein the post-processing operation comprises a rolling operation of hot-rolling the slab in a rolling mill.

The slab preparation operation may include an operation of producing the slab in a continuous caster, and the scarfing operation is performed on a run out table connecting the continuous caster and the reheating unit.

The slab preparation operation may include an operation of producing the slab in a continuous caster, and the scarfing operation may be performed on a run out table which is installed separately from the continuous caster and the reheating unit.

The slab processing method may include a stacking operation of temporarily storing the slab in an area other than the continuous caster and a process line of the reheating unit before or after the scaring operation.

The rolling operation may include a rough-rolling operation of rough-rolling the slab while the slab passes through a rough-rolling mill.

The slab prepared in the slab preparation operation may have a thickness ranging from 40 to 150 mm. Herein, the post-processing operation may include: a rough-rolling operation of rough-rolling the slab while passing through a rough-rolling mill; a reheating operation of heating the rough-rolled slab; and a hot-rolling operation of hot-rolling the heated slab in a rolling mill.

At least the slab preparation operation, scarfing operation and post-processing operation may be performed in facilities which are connected by a run out table.

The post-processing operation may include: a coiling operation of coiling the slab so as to equalize the temperature of the heated slab; and an uncoiling operation of uncoiling the coiled slab.

The slab prepared in the slab preparation operation may have a thickness ranging from 40 to 120 mm, the post-processing operation including: a temperature equalization operation of charging the produced slab into a temperature equalization unit to increase a temperature of the slab to 1,000°C or higher; and a rolling operation of hot-rolling the slab with the temperature equalized in a rolling mill, the scarfing operation being performed before or after the temperature equalization operation.

In accordance with another exemplary embodiment, a slab processing system includes: a transfer unit transferring prepared slab; and a scarfing unit installed on the transfer unit and scarfing at least four edge regions of the slab at once.

The scarfing unit may include: a torch unit facing the edge region of the slab and scarfing at least four edge regions of the slab; a support unit supporting the torch unit; and a collection unit surrounding the edge region of the slab and collecting molten iron oxide scattered during the scarfing.

The torch unit may include at least one corner torch facing the edge region of the slab.

The torch unit may include at least one narrow-side torch which faces at least the edge region at one side of the slab and a narrow-side region of the slab at the same time.

The torch unit may include a preheating nozzle preheating a portion to be scarfed.

The collection unit may include: a chamber surrounding the edge region of the slab to collect scattered molten iron oxide; a spray nozzle installed on an inner wall of the chamber to spray cooling water into the chamber; an exhaust hole through which vapor generated in the chamber is exhausted; and a discharge hole through which the scattered molten iron oxide accumulated in the chamber and the cooling water are discharged.

The scarfing unit may include: a defect detection unit detecting surface defects in at least the edge region of the slab; a position detection unit detecting a position of the edge region of the slab; and a control unit controlling operations of the torch unit and the support unit according to detection results of the defect detection unit and the position detection unit.

The defect detection unit may be at least one of a camera collecting image data of the slab surface, and a magnetic sensor collecting leakage magnetic field data by applying a magnetic field to the slab surface.

The position detection unit may be at least one of a laser sensor irradiating the slab surface with a laser to collect a signal thereof, an ultrasonic sensor irradiating the slab surface with an ultrasonic wave to collect a signal thereof, and a contact-type displacement sensor contacting the slab surface to collect position data of the slab surface.

The slab processing system may further include: a casting unit of producing the slab from molten steel; and a rolling unit rolling the scarfed slab.

The casting unit and the rolling unit may be connected by the transfer unit.

### ADVANTAGEOUS EFFECTS

According to embodiments of the present invention, since scarfing is performed on an edge region of a slab produced by continuous casting before the slab is cooled and the slab is then heated for hot-rolling or directly hot-rolled, it is possible to prevent the growth of cracks generated during the cooling of the slab and also remove the pre-existing cracks, thus enabling to reduce defects in the edge region which might easily occur in a hot-rolled steel plate after the hot-rolling.

In addition, defects existing in edge regions of a slab are removed at high temperature, and the temperature of the slab charged into a reheating furnace can be maintained high. Accordingly, a retention time required for raising the temperature of the slab in the reheating furnace can be reduced to enhance the operating rate of a rolling facility, resulting in improvement of hot-rolling productivity.

Furthermore, cracks may be easily produced in a narrow-side region of a thin slab due to its high casting speed characteristic, but, according to embodiments of the present invention, scarfing is performed on surfaces of narrow sides and edge regions of the thin slab in advance before a hot-rolling process, to thereby remove the cracks. Therefore, it is possible to reduce defects in a product, further enhance the casting speed of the thin slab, and resultantly improve the productivity of a continuous caster.

### BRIEF DESCRIPTION OF THE DRAWINGS

FIG. 1 is a conceptual diagram illustrating a related art method for processing a slab.

FIGS. 2 and 3 are a conceptual diagram and a flowchart illustrating a method for processing a slab according to an embodiment of the present invention.

FIGS. 4 and 5 are a conceptual diagram and a flowchart illustrating a method for processing a slab according to another embodiment of the present invention.

FIGS. 6 and 8 are a conceptual diagram and a flowchart illustrating a method for processing a slab according to still another embodiment of the present invention.

FIG. 9 is a conceptual diagram illustrating scarfing means of a slab processing system according to an embodiment of the present invention.

FIG. 10 is a conceptual diagram illustrating scarfing means of a slab processing system according to another embodiment of the present invention.

Mode for Invention

Embodiments of the present invention will be described below in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present disclosure to those skilled in the art. In the drawings, like reference numerals refer to like elements or components.

### MODE FOR CARRYING OUT THE INVENTION

First, a bar described herein refers to a material which is obtained between a first rolling step (first rough-rolling) and a final rolling step (last rolling) of a slab produced in a continuous caster.

Furthermore, the concept of "in-line" described herein means that facilities such as a continuous caster, reheating means, a rough-rolling mill, a coil box, a rolling mill, cooling means and a winder are connected by means of a run out table, and thus a slab produced in a continuous caster is transferred by the run out table and passes through the facilities sequentially.

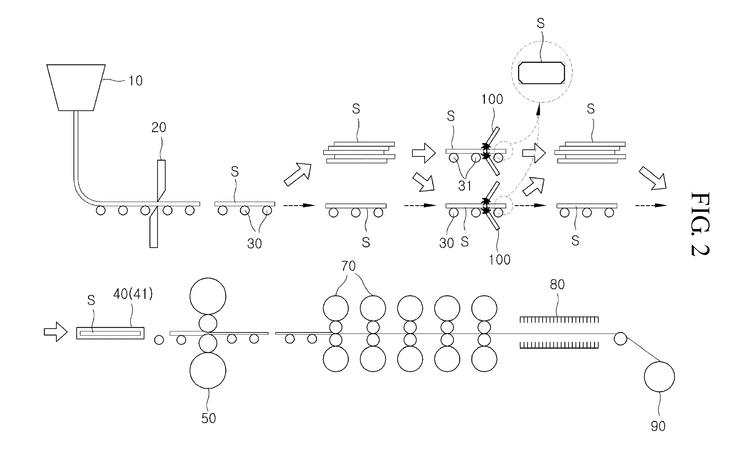

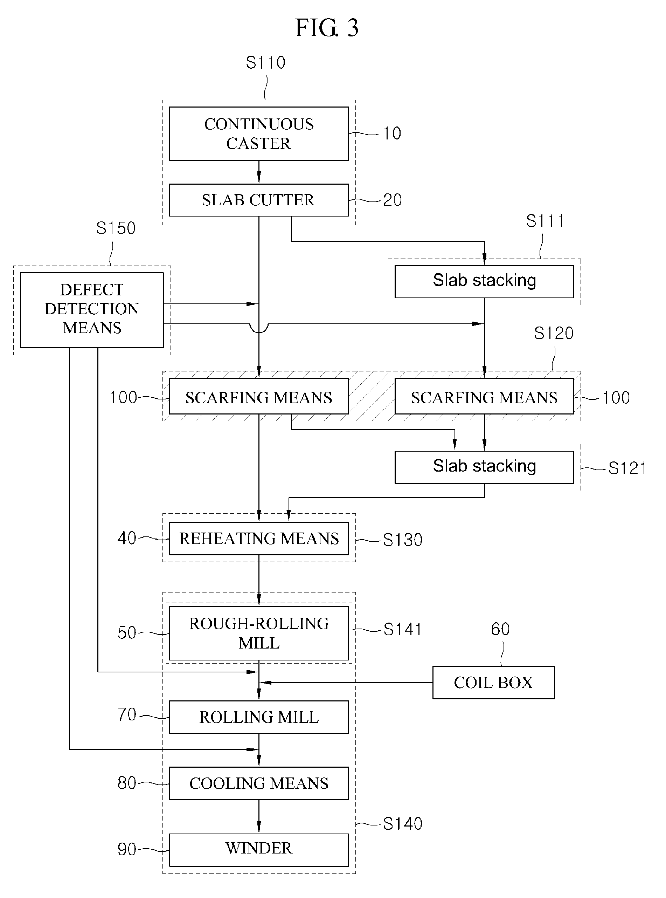

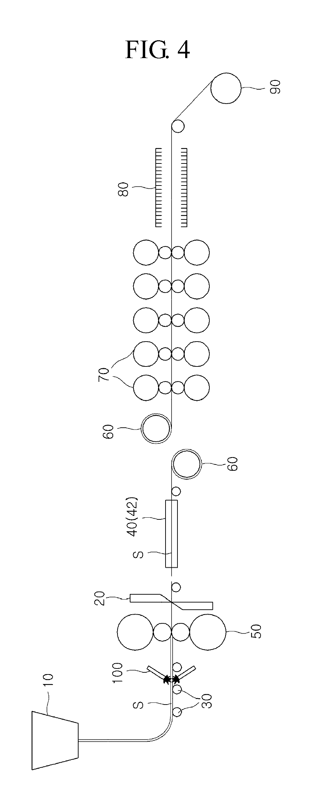

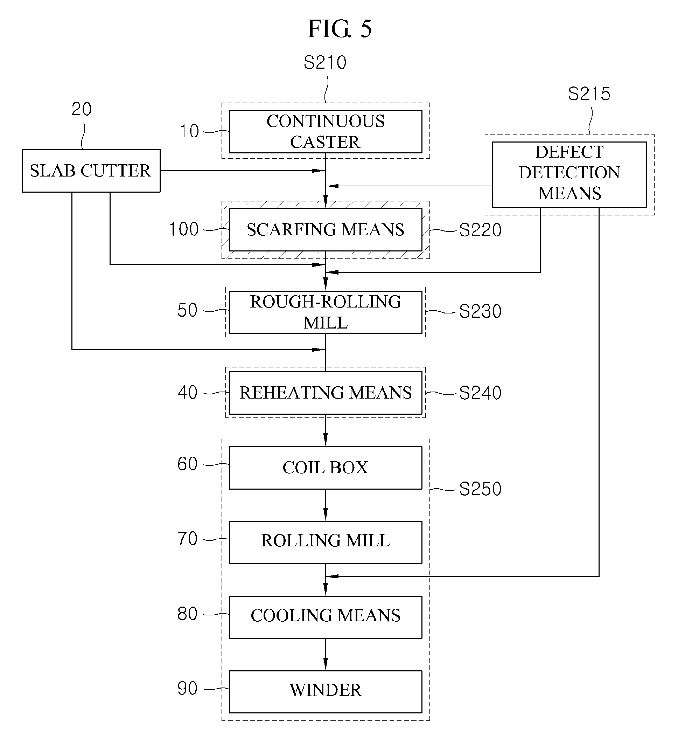

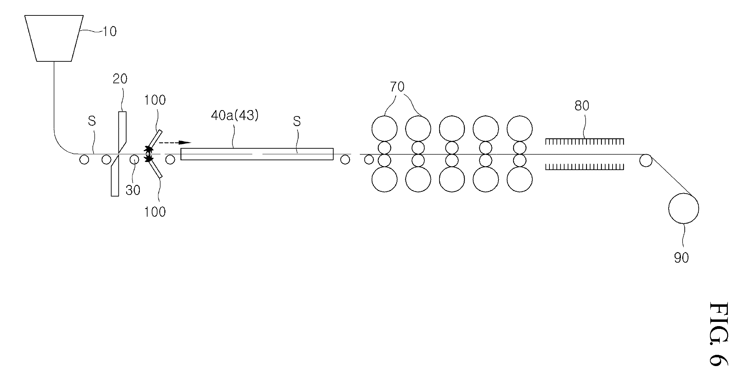

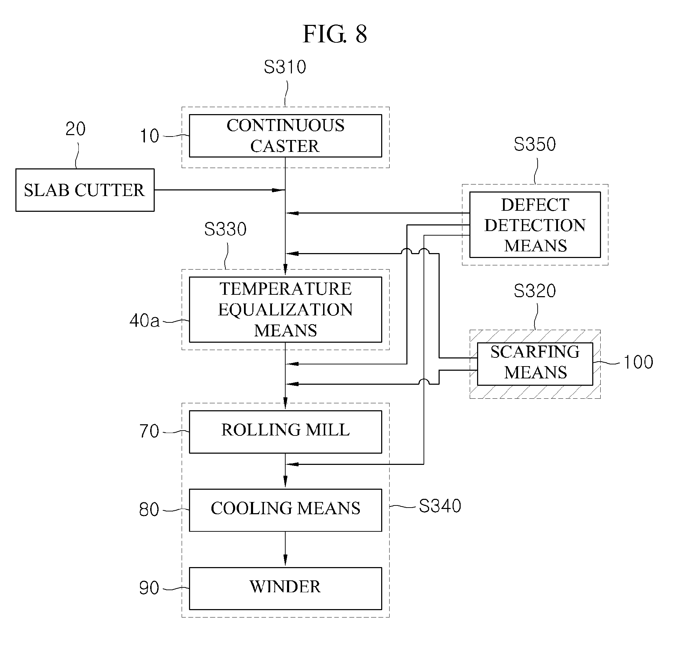

FIGS. 2 and 3 are a conceptual diagram and a flowchart illustrating a method for processing a slab according to an embodiment of the present invention, FIGS. 4 and 5 are a conceptual diagram and a flowchart illustrating a method for processing a slab according to another embodiment of the present invention, and FIGS. 6 and 8 are a conceptual diagram and a flowchart illustrating a method for processing a slab according to still another embodiment of the present invention.

As illustrated in the drawings, a slab processing method according to the present invention mainly includes: a slab preparation step (S110) of producing a slab S in a continuous caster 10; a scarfing step (S120) of scarfing an edge region of the slab S before the slab S is cooled to a temperature below 600 °C; and a post-processing step of post-processing the slab S. Here, the post-processing step includes, for example, a rolling step (S 140) of hot-rolling the slab S to produce a steel plate. At a predetermined time before or after the scarfing step (S120), the method includes a detection step (S150) of detecting surface defects in the edge regions of the slab S.

The slab processing method performed in the way above will be described in detail according to the thickness of the slab.

FIGS. 2 and 3 illustrate a method for manufacturing a hot-rolled steel plate by using a relatively thick slab as a material.

As illustrated FIGS. 2 and 3, the method for manufacturing a hot-rolled steel plate by using a relatively thick slab S, e.g., slab S having a thickness of 120-500 mm, includes: a slab preparation step (S110) of producing a slab S in a continuous caster 10; a scarfing step (S120) of scarfing an edge region of the slab S before the slab S is cooled to a temperature below 600 °C; and a reheating step (S130) of charging the slab with the edge region scarfed into reheating means 40 and heating the slab at a temperature of 1,000°C or more; and a rolling step (S140) of hot-rolling the heated slab S by a rolling mill 70.

The slab preparation step (S110), which is a step of producing the slab S used as a material for a hot rolling, produces a continuous slab S with 120-500 mm in thickness by using the continuous caster 10, and then cut the continuous slab S into unit slabs S each having a weight of about 40 ton or less by using a torch cutting machine (TCM) 20 installed in the rear of the continuous caster 10. At this time, by means of a run out table 30, the continuous caster 10 is connected in-line with the reheating furnace 40, a rough-rolling mill 50, the rolling mill 70, cooling means 80 and a winder 90 where the reheating step (S310) and the rolling step (S140) are performed.

Accordingly, the slab S cut by a slab cutter 20 is carried on the run out table 30 and transferred to the reheating means 40. While the slab S is being transferred by the run out table 30, in other words, before the temperature of the central portion of the slab S is lowered to a temperature below 600 °C, the scarfing step (S120) is performed.

The scarfing step (S120) is a step of removing defects in the edge region of the slab S by scarfing four edge regions of the slab S while the slab S is being transferred by the run out table 30, and the edge region may be scarfed during the transfer of the slab S by installing scarfing means 100 capable of scarfing the edge region of the slab S on the run out table 30. Accordingly, the edge regions of the slab S are scarfed before the temperature of the central portion of the slab S is lowered to less than 600 °C, resulting in the edge defects of the slab S being removed. This prevents the defects from being occurred in the edge regions, which might be detected in a final product, i.e., a hot rolled steel plate made in the case of using the slab S having the edge defects.

The reason why the scarfing is performed on the edge regions of the slab S before the temperature of the central portion of the slab S is lowered to a temperature below 600 °C is to improve a process speed by reducing a time required to additionally reheat the cooled slab up to a scarfing temperature, and also to prevent the growth of cracks and the generation of new cracks caused by the cooling of the slab S.

The scarfing step (S120) is not limited to the case where it is performed on the run out table 30 which connects the continuous caster 10 in-line with the reheating means 40 as described above, but may be modified according to various embodiments as long as the scarfing can be performed before the temperature of the central portion of the slab S is lowered to less than 600 °C.

{For example, the method may include a stacking step (S111) of moving the slabs S, which are cut by the slab cutter 20 and are being transferred by the run out table 30, in an open-storage area and temporarily storing the slabs. The slabs S temporarily stored in the open-storage area may be carried on the run out tables 30 and 31 again, and then the scarfing of the edge regions may be performed. Herein, scarfing may be performed by transferring the slabs S to the run out table 30 which connects the continuous caster 10 in-line with the reheating means 40, or by transferring the slabs S to the run out table 31 which is separately provided. The slab S which has been subjected to the scarfing may be directly charged into the reheating means 40, but the present invention is not limited thereto and temporarily stored in the open-storage area.

When the slab S is temporarily stored in the open-storage area, it is noted that the temperature of the central portion of the slab S should not be lowered to less than 600 °C.

As described above, as the edge regions of the slab S are scarfed before the temperature of the central portion of the slab S is lowered to less than 600 °C, it is possible to reduce a time taken to reheat the slab S to a scarfing temperature thereby enhancing a scarfing speed. Also, the defects in the edge regions of the slab S of peritectic reaction steel or high alloy steel are removed at high temperature, and finally edge defect-free slab S can thus be manufactured.

The method may include a detection step (S150) of detecting surface defects in the edge region of the slab S before the scarfing step (S120), and it is desirable to control a scarfing level for the edge region of the slab S by controlling the operation of the scarfing means 100 during the scarfing step (S120) according to the detected results of the surface defects. The surface defects are detected by performing the detection step (S150) prior to the scarfing step (S120), and the scarfing step (S120) is controlled according to the detection results. However, the present invention is not limited thereto, and thus the detection step (S150) may be performed during a certain step performed after the scarfing step (S120), for example the reheating step (S130) or rolling step (S 140). Thus, when defects are detected in intermediate products such as a slab and a bar, and final products such as a hot-rolled steel plate, corresponding data are fed back and can be used as a control factor for a facility in production of following slabs, bars and hot-rolled steel plates. The detection step (S150) may be selectively performed before or after the scarfing step (S120), or performed both before and after the scarfing step (S120).

Of course, the detection step (S150) is not performed during a slab processing process, and scarfing on the edge regions of the slab S may be performed at once. At this time, the detection step (S 150) may be performed as only means for checking whether there are surface defects which may exist in slabs, bars and hot-rolled steel plates.

The slab S with the edge regions scarfed is charged into the reheating furnace 40 before the temperature of the central portion of the slab S is lowered to less than 600 °C, and then the reheating step (S 130) is performed.

The reheating step (S130) is a step of increasing the temperature of the slab S to 1,000°C or more for hot-rolling the slab S, and any means can be used as the reheating means 40 as long as it can increase the temperature of the slab S to 1,000°C or more. For example, in the current embodiment, a reheating furnace 41 is used as the reheating means 40. According to the related art method, the slab S should be left in the reheating furnace 41 for about 3 hours after charged into the reheating furnace 41 in order to increase the temperature of the slab S, which has been cooled to about 100°C, to 1,000°C or higher; however, according to the present invention, since the temperature of the slab S is maintained at 600 °C or more, the temperature of the slab S can be increased to 1,000°C or higher for about only 2 hours after the slab S is charged into the reheating furnace. Therefore, as the slab S with relatively high temperature is charged into the reheating furnace 41, the operating rate of the reheating furnace 41 can be increased.

The slab S heated at 1,000 or higher in the reheating step (S130) is subjected to the rolling step (S 140).

The rolling step (S140) is a step of producing a final product, i.e., hot-rolled steel plate (hot-rolled coil) by hot-rolling the slab S. Specifically, the slab S is hot-rolled to a desired thickness by a rolling mill 70 and then cooled while passing through the cooling means 80. The cooled hot-rolled steel plate is wound by the winder 90 to produce a hot-rolled coil.

Prior to the rolling step (S140), a rough-rolling step (S141) may be performed to prevent the excessive load of the rolling mill 70.

The rough-rolling step (S141) is a step of not rolling the slab S to a desired thickness directly but rolling the slab S to an intermediate thickness to thus reduce the load of the rolling mill 70 and prevent defects which might be generated in the steel plate. In the rough-rolling step (S141), the slab heated at 1,000°C or higher is input to the rough-rolling mill 50 and then rough-rolled into a bar having an intermediate thickness while passing through the rough-rolling mill 50. The rough-rolled bar is input into the rolling mills 70 which are sequentially disposed in the rear of the rough-rolling mill 50 and then hot-rolled regularly. Before the rough-rolled bar is input into the rolling mill 70, the bar may be wound around the coil box 60 and temporarily on standby while preventing the bar from being cooled. In the case where the bar is wound around the coil box 60 and temporarily on standby, the hot-rolling is performed by inputting the bar into the rolling mill 70 while slowly unwinding the bar wound around the coil box 60.

FIGS. 4 and 5 illustrate a method for manufacturing a hot-rolled steel plate by using a relatively thin slab as a material. In particular, FIGS. 4 and 5 illustrate a method for manufacturing a hot-rolled steel plate by hot-rolling the slab S produced by the continuous caster 10 in a relatively short time.

As illustrated in the drawings, the method for manufacturing a hot-rolled steel plate by performing a rough-rolling step (S230) on a continuously cast slab S having a relatively thin thickness (40-120 mm) in a relatively short time (e.g., 100 seconds or less), includes: a slab preparation step (S210) of producing the slab S in the continuous caster 10; a rough-rolling step (50) of rough-rolling the produced slab S while passing through the rough-rolling mill 50; a reheating step (S240) of increasing the temperature of the slab S to 1,000 °C or higher by allowing the rough-rolled slab S to pass through an induction heating device 42; and a hot-rolling step (S250) of hot-rolling the reheated slab S in the rolling mill 70.

In the slab preparation step (S210), as described in the previous embodiment, unit slabs S are produced by using the continuous caster 10 and a slab cutter 20. Here, the slab cutter 20 may be disposed preferably between the reheating means and the rough-rolling mill 50. However, the location of the slab cutter 20 is not limited thereto, and thus the slab cutter 20 may be disposed between the continuous caster 10 and the scarfing means 100 or between the scarfing means 100 and the rough-rolling mill 50, or after the rough-rolling mill 50, according to the weight and length of the slab. Since a thin slab S having a thickness of about 40-120 mm is relatively thinner than a general slab S having a thickness of 120-500 mm, the thin slab S may be directly input into the rough-rolling mill 50 without being cut. Therefore, the thin slab S is not stacked in the open-storage area separately but directly subjected to the rough-rolling step (S231). To this end, by means of a run out table 30, the continuous caster 10 is connected in-line with the reheating furnace 40, the rough-rolling mill 50, the coil box 60, the rolling mill 70, the cooling means 80 and the winder 90 where the rolling step (S230) are performed.

As described in the previous embodiment, the step (S220) is to remove defects in edge regions of the slab S by scarfing four edge regions of the slab S which is being transferred by the run out table 30. To prevent the slab S from being cooled, it is preferable that the slab S produced in the slab preparation step (S210) is not separately stacked and cooled in the open-storage area, but the scarfing step (S220) is performed before the temperature of the slab S is not lowered, for example, performed on the high-temperature slab S having a temperature of about 1,000°C at the central portion thereof. In the scarfing step (S220), as described in the previous embodiment, it is preferable that the scarfing of the edge regions is performed during transfer of the slab S by installing scarfing means 100 capable of scarfing the edge regions of the slab S on the run out table 30. Accordingly, edge defects of the thin slab S are removed, so that it is possible to remove defects in the edge regions which might be generated in the final product, hot-rolled steel plate, made of this thin slab.

After the scarfing step (S220), the rolling step (S250) is performed.

As described above, the rolling step (S250) is to produce the final product, i.e., hot-rolled steel plate (hot-rolled coil) by hot-rolling the slab S. Prior to the rolling step (S250), a rough-rolling step (S230) may be performed to prevent the excessive load of the rolling mill 70. The rough-rolled bar may be reheated at 1,000°C or higher by allowing the rough-rolled bar to pass through the induction heater 42 or a tunnel-type heating furnace (S240).

Before or after the scarfing step (S220), the method may include a detection step (S260) of detecting surface defects in the edge regions of the slab S. For example, as illustrated in FIG. 5, the method may include the detection step (S260) after the slab preparation step (S210), after the scarfing step (S220), and during the rolling step (S250).

FIGS. 6 to 8 illustrate a method for manufacturing a hot-rolled steel plate by using a relatively thin slab as a material. In particular, FIGS. 6 to 8 illustrate a method for manufacturing a hot-rolled steel plate by allowing the slab S produced in the continuous caster 10 to pass through temperature equalization means 40a to make the temperature of the slab S uniform, and then hot-rolling the slab S.

As illustrated in the drawings, the method for manufacturing a hot-rolled steel plate using the slab S which is relatively thin (40-120 mm) to be easily cooled and has a non-uniform temperature distribution, includes: a slab preparation step (S310) of producing the slab S in the continuous caster 10; a temperature equalization step (S330) of charging the slab S into the temperature equalization means 40a and equalizing the temperature of the slab to 1,000°C or higher; and a rolling step (S340) of hot-rolling the temperature-equalized slab S by the rolling mill 70 to produce a steel plate. Before or after the temperature equalization step (S330), the method includes at least a scarfing step (S320) of scarfing at least the edge regions of the slab S.

FIG. 6 illustrates a method in which the scarfing step (S320) is performed before the temperature equalization step (S330), and a method for manufacturing a hot-rolled steel plate is performed in order of the slab preparation step (S310), the scarfing step (S320), the temperature equalization step (S330) and the rolling step (S340).

In the slab preparation step (S310), as described in the previous embodiment, unit slabs S are produced by using the continuous caster 10 and a slab cutter 20. At this time, the slab cutter 20 may be placed at a predetermined position according to the weight and length of the produced slab, for example, placed preferably between the continuous caster 10 and the scarfing means 100. Since a thin slab S having a thickness of about 40-120 mm is produced through high-speed casting, fine cracks are densely generated near oscillation marks of slab edges. Such fine cracks become more serious when the slab is oxidized by air in the temperature equalization means 40a during the temperature equalization step (S330). Therefore, it is preferable to remove the cracks by scarfing the edge regions of the slab S before the temperature equalization step (S330) is performed. Accordingly, by means of a run out table 30, the continuous caster 10 is connected in-line with the temperature equalization means 40a where the temperature equalization step (S330) is performed, and in-line the rolling mill 70, the cooling means 80 and the winder 90 where the rolling step (S340) is performed. A rough-rolling mill may be disposed in-line with the front or rear of the temperature equalization means 40a.

As described in the previous embodiment, the scarfing step (S320) is a step of removing defects in the edge region of the slab S by scarfing four edge regions of the slab S while the slab S is being transferred by the run out table 30, and therefore, as described in the previous embodiment, it is preferable that the edge regions are scarfed during the transfer of the slab S by installing scarfing means 100 capable of scarfing the edge regions of the slab S on the run out table 30. Accordingly, edge defects of the thin slab S are removed, so that it is possible to remove defects in the edge regions which might be generated in the final product, hot-rolled steel plate, made of this thin slab.

The slab S with the edge regions scarfed is charged into the temperature equalization means 40a, and then the temperature equalization step (S330) is performed.

The temperature equalization step (S330) is a step of preventing defects in a final product obtained after the rolling step, by equalizing the temperature of the slab S which is cooled and has a non-uniform temperature distribution due to its small thickness, wherein a tunnel furnace 43 may be used as the temperature equalization means 40a. The non-uniform temperature distribution of the slab becomes uniform while the slab passes through the tunnel furnace 43.

The slab S having the uniform temperature distribution is subjected to the rolling step (S340) for hot-rolling.

As described above, the rolling step (S340) is a step of producing final products, i.e., hot-rolled steel plate (hot-rolled coil) by hot-rolling the slab S. Since the slab S is thin, a rough-rolling is not performed separately.

Before or after the scarfing step (S320), the method may include a detection step (S350) of detecting surface defects in the edge regions of the slab S. For example, as illustrated in FIG. 8, the method may include the detection step (S350) after the slab preparation step (S310), after the temperature equalization step (S330), and during the rolling step (S340).

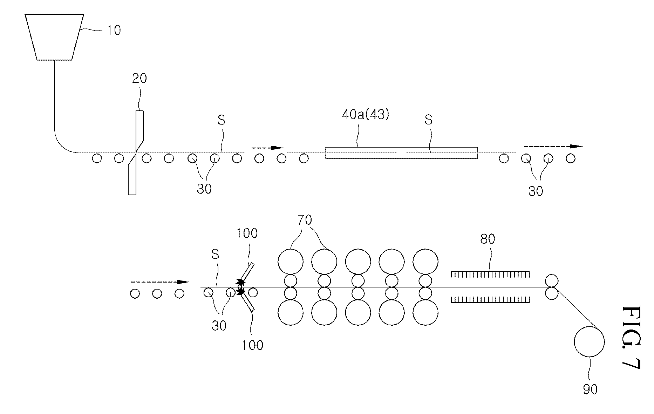

As illustrated in FIG. 7, the scarfing step (S320) may be performed after the temperature equalization step (S330).

FIG. 7 illustrates a method in which the scarfing step (S320) is performed after the temperature equalization step (S330), and a method for manufacturing a hot-rolled steel plate is performed in order of the slab preparation step (S310), the temperature equalization step (S330) and the rolling step (S340). The scarfing step (S320) may remove all the cracks which are generated and grown in the slab processing step (S310) and the temperature equalization step (S330), thereby making it possible to improve the quality of the slab S entering the rolling step (S340). However, the slab will be more scarfed than in the scarfing step (S320) illustrated in FIG. 6.

Description will be given of facilities used for the slab processing method performed in the way above.

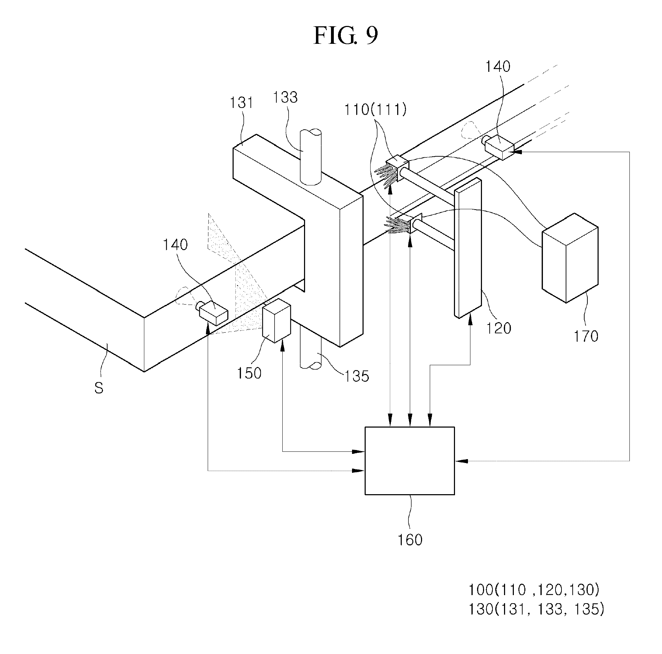

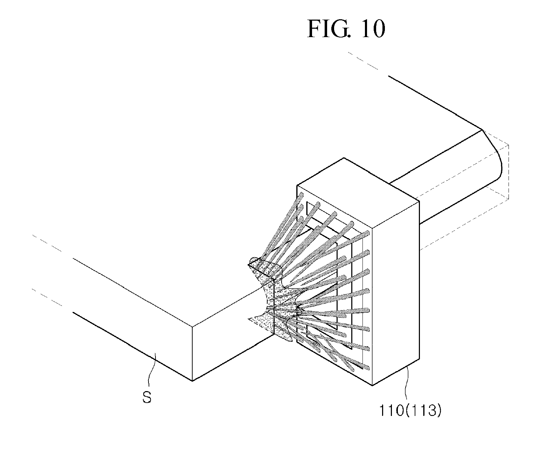

FIG. 9 is a conceptual diagram illustrating scarfing means of a slab processing system according to an embodiment of the present invention, and FIG. 10 is a conceptual diagram illustrating scarfing means of a slab processing system according to another embodiment of the present invention.

The slab processing system according to an embodiment of the present invention includes: casting means producing a slab S from molten steel; transfer means transferring the produced slab S; scarfing means 100 installed on the transfer means and scarfing at least edge an region of the slab S; and rolling means hot-rolling the scarfed slab S. Furthermore, the slab processing system includes at least one of reheating means of increasing the temperature of the slab to 1,000°C or more, and rough-rolling means of rough-rolling the slab S to have a thickness greater than the thickness of the finally hot-rolled steel plate.

A continuous caster 10, a slab cutter 20, a run out table 30, a reheating furnace 41, an induction heater 42, a tunnel furnace 43, a rough-rolling mill 50, a coil box 60, a rolling mill 70, cooling means 80, and a winder 90, which represent the casting means, the transfer means, the reheating means, the rough-rolling means, and the rolling means, respectively, are obvious to a person skilled in the art, and thus detailed description thereof will be omitted herein.

In the slab processing system according to the embodiment of the present invention, however, the casting means, it is preferable that the reheating means, the rough-rolling means and the rolling means are connected in-line with each other by the transfer means, i.e., the run out table 30, and the scarfing means 100 is installed on the transfer means.

As illustrated in FIG. 9, the scarfing means 100 is means for scarfing four edges of the slab, and includes: a torch unit 110 facing the edge region of the slab S, and scarfing at least the edge region of the slab S; a support unit 120 supporting the torch unit 110; a collection unit surrounding the edge region of the slab S and collecting molten iron oxide scattered during the scarfing. The slab processing system further includes a defect detection unit 140 detecting surface defects in at least the edge region of the slab S; a position detection unit 150 detecting a position of the edge region of the slab S; a control unit 160 controlling operations of the torch unit 110 and the support unit 120 according to the detection results of the defect detection unit 140 and position detection unit 150.

It is preferable that the torch unit 110 is provided with four corner torches 111 which are separately disposed at four edge regions of the slab S and respectively face the edge regions of the slab. A gas supplier 170 for supplying gaseous fuel and oxygen is connected to the corner torch 111. In the torch unit 110, a preheating nozzle (not shown) for preheating a portion to be scarfed to a temperature at which the scarfing can be performed, before or at an initial stage of the scarfing step, is installed together with the corner torch 111, or a preheating function may be additionally provided to the corner torch 111 itself.

The support unit 120 is means for supporting the corner torches 111 to face the four edge regions of the slab S, and it is preferable that the support unit 120 may be moved horizontally and vertically allowing the corner torches 111 to respectively face the four edge regions of the slab S.

The collection unit 130 is means for protecting peripheral facilities by collecting molten iron oxide scattered when the torch unit 110 scarfs the edge regions of the slab S, and includes: a chamber 131 surrounding the edge region of the slab S to collect the scattered molten iron oxide inside thereof; a spray nozzle (not shown) installed on an inner wall of the chamber 131 to spray cooling water into the chamber 131; an exhaust hole 133 for exhausting vapor generated from the inside of the chamber 131; and a discharge hole 135 for discharging the scattered molten iron oxide accumulated in the chamber 131 and the cooling water.

It is preferable that the chamber 131 is "⊂" "-shaped to surround a narrow side at one side of the slab S, and formed in the shape of a case of which a side facing the torch unit 110 is opened in order to collect the scattered molten iron oxide.

The spray nozzle is installed on the inner wall of the chamber 131, and sprays cooling water onto the scattered molten iron oxide introduced into the chamber 131 to thereby cool down the scattered molten iron oxide. The spray nozzle may be modified in various ways capable of cooling the scattered molten iron oxide introduced into the chamber 131 without interference with the scarfing operation of the torch unit 113.

The exhaust hole 133 is means for collecting and exhausting vapor generated during the cooling of the scattered molten iron oxide, and may be formed on a top surface of the chamber 131.

The discharge hole 135 is means for discharging the scattered molten iron oxide which is cooled, and the cooling water, and may be formed on an undersurface of the chamber 131.

The defect detection unit 140 is means for detecting defects in the edge region of the slab S which is being transferred, and uses at least one of a camera collecting image data of the surface of the slab S, and a magnetic sensor collecting leakage magnetic field data by applying a magnetic field to the slab surface. The defect detection unit 140 is installed at the foremost end of the scarfing means 100 to detect the surface defects of the slab S before the scarfing operating, and is also installed at the rearmost end of the scarfing means 100 to check the surface state of the slab S after the scarfing operation.

The position detection unit 150 is means for detecting the position of the edge region of the slab S which is being transferred, thereby keeping the torch unit 110 spaced from the edge of the slab S by a predetermined distance. The position detection unit 150 may use a laser sensor of irradiating the surface of the slab S with a laser to collect a signal thereof, an ultrasonic sensor of irradiating the slab surface with an ultrasonic wave to collect a signal thereof, or a contact-type displacement sensor which is in contact with the slab surface to collect position data of the slab surface.

The control unit 160 is means for controlling the operations of the torch unit 110 and the support unit 120 according to the detection results of the defect detection unit 140 and the position detection unit 150. The control unit 160 controls a scarfing amount by controlling the operations of the corner torch 111 and the gas supplier 170, and also controls a scarfing amount by adjusting a space between the slab and the corner torch 111 through control of the support unit 120.

FIG. 10 illustrates a torch unit 110 used to scarf edge regions of a thin slab S. As illustrated in FIG. 10, it is preferable that the torch unit 110 according to another embodiment of the present invention includes at least one narrow-side torch 113 facing at least the edge region at one side thereof and a narrow-side region at the same time. Since the thin slab S has a relatively small thickness, cracks may be generated in the narrow side of the slab S as well as the edge regions of the slab S. To prevent this, it is preferable that the narrow-side torch 113 has the shape of approximately "⊂" to face both the edge regions and the narrow-side region of the slab. Here, the narrow-side torch 113 is supported by the support unit 120 to adjust the position of the narrow-side torch 113, and is connected to the gas supplier 170 supplying gaseous fuel and oxygen.

The hot-rolling is described as an example of the post-processing step in the current embodiment, but the post-processing step is not limited thereto. Before the slab is cooled to a temperature below 600 °C or 1,000°C, various post-processing steps other than the hot-rolling may be performed after at least four edge regions are scarfed.

Although the present invention has been described with reference to the accompanying drawings and preferred embodiments, the present invention is not limited thereto but limited by following claims. Therefore, it will be readily understood by a person skilled in the art that various modifications and changes can be made thereto without departing from the spirit and scope of the present invention defined by the appended claims.

## Claims

1. A slab processing method, comprising:
a slab preparation operation of preparing a slab to be processed;
a scarfing operation of scarfing at least an edge region of the slab before the slab is cooled to a temperature below 600 °C; and
a post-processing operation of post-processing the slab.

2. The slab processing method of claim 1, comprising a detection operation of detecting surface defects in the edge region of the slab,
wherein a scarfing amount of the edge region of the slab during the scarfing operation is controlled according to detection results of the surface defects.

3. The slab processing method of claim 1, wherein, after the scarfing operation, the slab is subjected to the post-processing operation in the state where a temperature of the slab is maintained at 600 °C or higher.

4. The slab processing method of any one of claims 1 to 3, wherein the scarfing operation is performed such that four edge regions of the slab are scarfed at the same time.

5. The slab processing method of any one of claims 1 to 3, wherein the scarfing operation is performed such that four edge regions of the slab and narrow-sides at both sides of the slab are scarfed at once.

6. The slab processing method of claim 1, wherein the scarfing operation is performed while the slab prepared in the slab preparation operation is being transferred to the post-processing operation.

7. The slab processing method of claim 1, wherein the slab prepared in the slab preparation operation has a thickness ranging from 120 to 500 mm, and the slab processing method further comprises a reheating operation of charging the slab scarfed in the scarfing operation into a reheating unit to increase a temperature of the slab to 1,000 °C or higher,
wherein the post-processing operation comprises a rolling operation of hot-rolling the slab in a rolling mill.

8. The slab processing method of claim 7, wherein the slab preparation operation comprises an operation of producing the slab in a continuous caster, and the scarfing operation is performed on a run out table connecting the continuous caster and the reheating unit.

9. The slab processing method of claim 7, wherein the slab preparation operation comprises an operation of producing the slab in a continuous caster, and the scarfing operation is performed on a run out table which is installed separately from the continuous caster and the reheating unit.

10. The slab processing method of claim 8 or 9, comprising a stacking operation of temporarily storing the slab in an area other than the continuous caster and a process line of the reheating unit before or after the scaring operation.

11. The slab processing method of claim 7, wherein the rolling operation comprises a rough-rolling operation of rough-rolling the slab while the slab passes through a rough-rolling mill.

12. The slab processing method of claim 1, wherein the slab prepared in the slab preparation operation has a thickness ranging from 40 to 150 mm,
wherein the post-processing operation comprises:
a rough-rolling operation of rough-rolling the slab while passing through a rough-rolling mill;
a reheating operation of heating the rough-rolled slab; and
a hot-rolling operation of hot-rolling the heated slab in a rolling mill.

13. The slab processing method of claim 12, wherein at least the slab preparation operation, scarfing operation and post-processing operation are performed in facilities which are connected by a run out table.

14. The slab processing method of claim 12 or 13, wherein the post-processing operation comprises: a coiling operation of coiling the slab so as to equalize the temperature of the heated slab; and an uncoiling operation of uncoiling the coiled slab.

15. The slab processing method of claim 1, wherein the slab prepared in the slab preparation operation has a thickness ranging from 40 to 120 mm,
the post-processing operation comprising:
a temperature equalization operation of charging the produced slab into a temperature equalization unit to increase a temperature of the slab to 1,000°C or higher; and
a rolling operation of hot-rolling the slab with the temperature equalized in a rolling mill, the scarfing operation being performed before or after the temperature equalization operation.

16. A slab processing system, comprising: a transfer unit transferring prepared slab; and a scarfing unit installed on the transfer unit and scarfing at least four edge regions of the slab at once.

17. The slab processing system of claim 16, wherein the scarfing unit comprises:
a torch unit facing the edge region of the slab and scarfing at least four edge regions of the slab;
a support unit supporting the torch unit; and
a collection unit surrounding the edge region of the slab and collecting molten iron oxide scattered during the scarfing.

18. The slab processing system of claim 17, wherein the torch unit comprises at least one corner torch facing the edge region of the slab.

19. The slab processing system of claim 17, wherein the torch unit comprises at least one narrow-side torch which faces at least the edge region at one side of the slab and a narrow-side region of the slab at the same time.

20. The slab processing system of claim 18 or 19, wherein the torch unit comprises a preheating nozzle preheating a portion to be scarfed.

21. The slab processing system of any one of claims 17 to 19, wherein the collection unit comprises:
a chamber surrounding the edge region of the slab to collect scattered molten iron oxide;
a spray nozzle installed on an inner wall of the chamber to spray cooling water into the chamber;
an exhaust hole through which vapor generated in the chamber is exhausted; and
a discharge hole through which the scattered molten iron oxide accumulated in the chamber and the cooling water are discharged.

22. The slab processing system of claim 16 or 17, wherein the scarfing unit comprises:
a defect detection unit detecting surface defects in at least the edge region of the slab;
a position detection unit detecting a position of the edge region of the slab; and
a control unit controlling operations of the torch unit and the support unit according to detection results of the defect detection unit and the position detection unit.

23. The slab processing system of claim 22, wherein the defect detection unit is at least one of a camera collecting image data of the slab surface, and a magnetic sensor collecting leakage magnetic field data by applying a magnetic field to the slab surface.

24. The slab processing system of claim 22, wherein the position detection unit is at least one of a laser sensor irradiating the slab surface with a laser to collect a signal thereof, an ultrasonic sensor irradiating the slab surface with an ultrasonic wave to collect a signal thereof, and a contact-type displacement sensor contacting the slab surface to collect position data of the slab surface.

25. The slab processing system of claim 16, further comprising: a casting unit of producing the slab from molten steel; and a rolling unit rolling the scarfed slab.

26. The slab processing system of claim 25, wherein the casting unit and the rolling unit are connected by the transfer unit.
